# EUROPEAN PATENT SPECIFICATION

(11) **EP 3 608 605 B1**
(45) Date of publication and mention of the grant of the patent: **27.01.2021**
(21) Application number: 18382596.7
(22) Date of filing: 06.08.2018
(51) Int. Cl.: F24S 30/425, F16F 15/03

(54) **A SINGLE AXIS SOLAR TRACKER WITH A TORSIONAL VIBRATION DAMPING DEVICE**
EINACHSIGER SONNENVERFOLGER MIT TORSIONSSCHWINGUNGSDÄMPFUNGSVORRICHTUNG
SUIVEUR SOLAIRE À AXE UNIQUE COMPORTANT UN DISPOSITIF D'AMORTISSEMENT DE VIBRATIONS DE TORSION

(43) Date of publication of application: 12.02.2020
(73) Proprietor: Soltec Energías Renovables, SL, 30500 Molina de Segura (Murcia) (ES)
(72) Inventor: MORALES TORRES, RAUL, 30500 Molina de Segura (Murcia) (ES); CHAOUKI ALMAGRO, SAMIR, 28943 Fuenlabrada (Madrid) (ES); PAJARON SANTOS, PABLO, 30007 Murcia (ES)
(74) Representative: Juncosa Miró, Jaime

(56) References cited:
- WO-A2-2010/084175
- US-A1- 2008 308 091
- US-A1- 2017 179 872
- US-A1- 2017 227 080
- US-A1- 2018 013 380

## Description

### Technical field

The present invention relates in general to a single axis solar tracker with a torsional vibration damping device, and more in particular to a single axis solar tracker having a damping device configured for damping torsional vibrations caused by the wind.

### State of the art

Single axis solar trackers are known having a fixed structure and a pivoting assembly. The pivoting assembly has pivoting frame and a solar panel array arranged thereon. The pivoting frame is rigidly attached to a rotating shaft having a longitudinal axis, and the rotating shaft is rotatingly supported on two or more support elements of the fixed structure, thereby the pivoting assembly can rotate together with the rotating shaft about the longitudinal axis. The pivoting assembly is driven by a motor-reducer assembly to rotate with respect to the fixed structure to follow the relative movement of the sun.

The motor-reducer assembly is supported on a motor support element pertaining to the support elements, and is connected to a motor connection point of the rotating shaft adjacent to the motor support element. The reducer of the motor-reducer assembly is in general irreversible, for example by comprising a worm screw connected to the motor and meshed with a gear wheel connected to the rotating shaft so that the worm screw can rotate the gear wheel but the gear wheel cannot rotate the worm screw. As a result, the motor-reducer assembly provides mechanical retention against torsional vibration of the rotating shaft at the motor connection point.

The pivoting assembly, which often has relatively large dimensions, is prone to undergo rotational vibration produced by the wind. As the motor-reducer assembly provides retention against torsional vibration of the rotating shaft at the motor connection point, but the torsional rigidity of the rotating shaft allows an oscillating torsional vibration which rises along the rotating shaft as the distance from the motor connection point increases.

The pivoting assembly including the pivoting frame, the solar panels and the rotating shaft has a natural frequency of vibration. When the pivoting assembly vibrates with its own natural frequency, it falls into resonance, meaning that it oscillates with the largest amplitude at the same excitation force, and this can produce damages to the solar tracker. The occurrence of this torsional vibration in resonance is known in the art of solar trackers as "aeroelastic vibration", "galloping" or "flutter".

Document WO 2017046429 A1 describes a single-axis solar tracker having the above-mentioned features, wherein the reducer of the motor-reducer assembly that drives the rotation of the pivoting assembly has a motor-driven worm screw meshed with a gear wheel coaxially fixed to the rotating shaft, and wherein electrical cables are installed in a hollow interior of the rotating shaft and passed through a central opening of the gear wheel.

Document US 20170227080 A1 discloses a torsional damping device for stabilizing a structure exposed to wind such as a solar tracker. The torsional damping device comprises a housing for mounting to a structure experiencing a rotational force such as a pivoting assembly of a single axis solar tracker, an inertial body coupled to the housing so as to rotate about an axis, a biasing mechanism configured to bias the inertial body towards a neutral position, and a damping element configured to damp motion of the inertial body relative to the housing. The damping element can comprise a viscous fluid filling voids between the inertial body and the housing. A drawback of this torsional damping device is that the housing has to be attached to the rotation shaft of the pivoting assembly with the axis of the inertial body coaxial to the axis of the rotation shaft.

Document US 2017219045 A1 discloses a magnetic damper for vibration absorbers in machines and installations, particularly wind turbines. The magnetic damper comprises a ring with magnet elements attached thereto and a core slidably inserted into the ring. The damping provided by the magnetic damper occurs by magnetically generated Foucault currents. A simple pendulum is connected to the magnetic dampers and to the installation that is exposed to vibratory forces.

Document US 2018013380 A1 discloses a dynamic stabilizer for solar trackers including a damper, such as a gas spring, and an actuator able to lock the damper. The dynamic stabilizer is controlled from an external control unit that receives information from a plurality of sensors including environ sensors that can detect wind speed, wind direction, weather conditions (such as snow prediction), and vibration and/or displacement sensors. The dynamic stabilizer can provide a flexible movement and/or damping state during normal operation of the solar tracker and/or a rigid or locked state whereby the dynamic stabilizer acts as a restraint for the movements of the solar tracker.

Document WO 2010084175 A2 describes a method and a device for controlling the translation speed, the rotational speed, and the frequency and/or the amplitude of linear, rotational, and pendulum oscillations of components made of electrically conductive, non-ferromagnetic material by means of magnetic fields. The device comprises components which are guided by at least two magnetic fields. The magnetic fields are arranged one behind the other in the direction of motion of the components and have a constant, opposing polarity, in such a way that the magnetic field lines penetrate the cross-section of the components transversely and opposing voltages are induced in the components by the magnetic field lines. At least three Foucault current fields that lie one behind the other are produced in the components by the mentioned voltages, and Lorentz forces are produced by the interaction of the magnetic fields and the Foucault currents. The translation speed, the rotational speed, or the frequency and/or the amplitude of the linear, rotational, and pendulum oscillations of the components are controlled by the Lorentz forces according to the magnetic field strengths.

Documents US 2008/308091 and US 2017/179872 also disclose such solar trackers.

### Disclosure of the invention

The present invention contributes to solving the problem of aeroelastic vibrations by providing a solar tracker with a torsional vibration damping device, wherein the solar tracker comprises a rotating shaft having a longitudinal axis, a pivoting assembly fixedly connected to the rotating shaft, the pivoting assembly having solar panels arranged to receive solar radiation, a fixed structure including a plurality of support elements rotationally supporting the rotating shaft at a plurality of support points distributed therealong, a motor-reducer assembly operatively connected to rotate the rotating shaft about the longitudinal axis so as to track the sun, and a torsional vibration damping device having one moving member rigidly connected to the rotating shaft to move therewith and a stationary member rigidly attached to the fixed structure.

The motor-reducer assembly is cinematically connected to the rotating shaft at a motor connection point and has an irreversible reducer which provides retention against torsional vibration of the rotating shaft at the motor connection point.

The moving member of the torsional vibration damping device is rigidly connected to the rotating shaft at a damper connection point spaced apart from the motor connection point and arranged to move close to the stationary member without contact.

One member selected between the moving member and the stationary member comprises magnetic field-generating elements and the other member selected between the moving member and the stationary member comprises a section made of an electrically conductive, non-ferromagnetic material. Relative movement between the magnetic field-generating elements and the section made of an electrically conductive, non-ferromagnetic material produces a damping torque by Foucault currents effect which is applied to the rotating shaft and dampers the aeroelastic torsional vibration thereof.

With this construction, the torsional vibration of the rotating shaft produced by the wind is prevented by the motor-reducer assembly at the motor connection point and dampened by the torsional vibration damping device at the damper connecting point.

It will be understood that the further away the damper connecting point is from the motor connection point and the nearer they are to the ends of the rotating shaft, the better is the dampening effect achieved by the torsional vibration damping device.

In one embodiment, the motor connection point and the damper connecting point are respectively located at or near to opposite ends of the rotating shaft. In another embodiment, the motor connecting point is located in an intermediate middle section of the rotating shaft and the solar tracker includes two torsional vibration damping devices according to the invention and their respective damper connection points are located at or near to the opposite ends of the rotating shaft. Obviously, the solar tracker can include more than two torsional vibration damping devices if considered necessary.

In a preferred embodiment, the motor-reducer assembly is supported on a motor support element of the plurality of support elements, the motor connection point is located adjacent to the motor support element, the stationary member of the or each damping device is supported on a damper support element of the plurality of support elements, and one or more simple support elements of the plurality of support elements are located between the motor support element and the or each damper support element.

As far as the torsional vibration damping device is concerned, the stationary member comprises a stationary damper section and the moving member comprises a moving damper section.

In one embodiment, the magnetic field-generating elements are attached to the stationary damper section of the stationary member and the section made of an electrically conductive, non-ferromagnetic material is the moving damper section of the moving member.

For example, the stationary damper section comprises two opposite walls perpendicular to the longitudinal axis and made of a ferromagnetic material, such as iron, cobalt, nickel or alloys thereof, and the magnetic field-generating elements are permanent magnets attached to one of the opposite walls forming one single arched row or are permanent magnets attached to both opposite walls forming two respective arched rows facing each other.

In the case of one single arched row of permanent magnets is provided, the permanent magnets have front surfaces laying in a plane parallel to the opposite walls and a damping gap is provided between the front surfaces of the permanent magnets and the wall opposite thereto. In the case of two facing arched rows of permanent magnets are provided, the permanent magnets of the two arched rows have front surfaces laying in two respective planes parallel to the opposite walls, and a damping gap is provided between the front surfaces of the permanent magnets of the two facing arched rows. In any case, the moving damper section is plate-shaped, has opposite surfaces perpendicular to the longitudinal axis and is inserted so that it can move in the damping gap.

Inversely, in another embodiment, the magnetic field-generating elements are permanent magnets attached to the moving damper section of the moving member and the section made of an electrically conductive, non-ferromagnetic material is the stationary damper section of the stationary member.

For example, the stationary damper section comprises two opposite walls perpendicular to the longitudinal axis and made of an electrically conductive, non-ferromagnetic material, such as aluminium, cooper, or alloys thereof, and a damping gap is provided between the two opposite walls. The moving damper section is plate-shaped and has opposite surfaces perpendicular to the longitudinal axis, and the magnetic field-generating elements are permanent magnets lodged in openings provided in the moving damper section forming one single arched row or permanent magnets attached to both opposite surfaces of the moving damper section forming two respective arched rows. In any case, the permanent magnets have opposite front surfaces laying in two respective planes parallel to the opposite surfaces of the moving damper section, and the moving damper section with the permanent magnets is inserted so that it can move in the damping gap.

In any case, the plate-shaped moving damper section has preferably arched top and bottom edges and the opposite walls of the stationary damper section have respective arched top and bottom edges and are connected to one another by an arched bottom wall.

In a preferred embodiment, the moving member has an arm connecting the moving damper section to a shaft fastening element fastened to the rotating shaft, and the stationary member has a base support connecting the stationary damper section to a post fastening element fastened to the damper support element.

### Brief description of the drawings

The above and other features and advantages will be more fully understood from the following detailed description of merely illustrative and non-limiting embodiments with reference to the accompanying drawings, in which:
Fig. 1 is a diagrammatic elevation view of a solar tracker with a torsional vibration damping device according to an embodiment of the present invention;
Fig. 2 is a diagrammatic elevation partial view of the torsional vibration damping device included in the solar tracker of Fig. 1;
Fig. 3 is a cross-sectional view taken along the plane III-III of Fig. 2;
Fig. 4 is a diagrammatic elevation partial view of a torsional vibration damping device according to an alternative embodiment;
Fig. 5 is a cross-sectional view taken along the plane V-V of Fig. 4;
Fig. 6 is a diagrammatic elevation partial view of a torsional vibration damping device according to another alternative embodiment;
Fig. 7 is a cross-sectional view taken along the plane VII-VII of Fig. 6;
Fig. 8 is a diagrammatic elevation partial view of a torsional vibration damping device according to still another alternative embodiment;
Fig. 9 is a cross-sectional view taken along the plane IX-IX of Fig. 8; and
Fig. 10 is a diagrammatic elevation view of a solar tracker with a torsional vibration damping device according to an alternative embodiment of the present invention

### Detailed description of illustrative embodiments

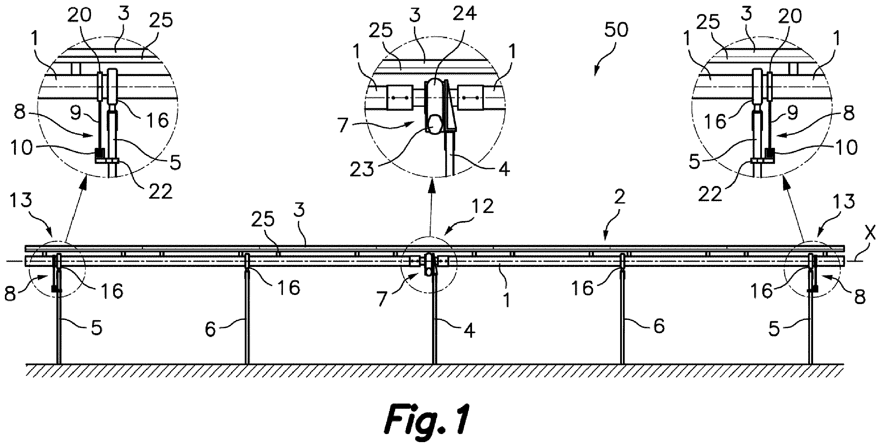

Referring first to Fig. 1, reference sign 50 generally designates a solar tracker with a torsional vibration damping device according to an embodiment of the present invention. The solar tracker 50 is a single axis solar tracker comprising a rotating shaft 1 which has a longitudinal axis X. The rotating shaft 1 is rotationally supported at a plurality of support points distributed therealong by a plurality of support elements 4, 5, 6 constituting a fixed structure. A pivoting assembly 2 is fixedly connected to the rotating shaft 1. The pivoting assembly 2 has one or more pivoting frames 25 attached to the rotating shaft 1 and a plurality of solar panels 3 arranged on the one or more pivoting frames 25 to receive solar radiation.

In the shown embodiment, the support elements 4, 5, 6 are individual support posts anchored to the ground although alternatively they could be part of a base structure anchored to the ground.

The rotating shaft 1 extends along the one or more pivoting frames 25 and has opposite ends and an intermediate middle region. The plurality of support elements 4, 5, 6 comprises a motor support element 4 located at the intermediate middle region of the rotating shaft 1, two damper support elements located near the opposite ends of the rotating shaft 1, respectively, and one more simple support element 6 located between the motor support element 4 and each damper support element 5.

A motor-reducer assembly 7 is supported on the motor support element 4. The motor-reducer assembly 7 comprises an electric motor 23 connected to a reducer 24 which in turn is connected to the rotating shaft 1 at a motor connection point 12 located adjacent to the motor support element 4, so that the motor-reducer assembly 7 is operatively connected to rotate the rotating shaft 1 about the longitudinal axis X so as to track the sun. The reducer 24 is an irreversible reducer which provides retention against torsional vibration to the rotating shaft 1 at the motor connection point 12.

In the illustrated embodiment, the irreversible reducer 24 comprises a motor-driven worm screw meshed with a gear wheel which is coaxially fixed to the rotating shaft 1, wherein the worm screw can rotate the gear wheel but the gear wheel cannot rotate the worm screw. However, other kinds of well-known irreversible reducers and/or other mechanical connections, including for example roller chains, belts, levers or connecting rods, between the reducer and the motor connection point 12 of the rotating shaft 1 will readily occur to one skilled in the art without departing from the scope of the invention.

Each damper support element 5 and each simple support element 6 is connected at the upper end thereof to a bearing support 16 carrying a bearing 26 mounted around the rotating shaft 1 for supporting the rotating shaft 1 and guiding rotation thereof.

In the embodiment shown in Fig. 1, two torsional vibration damping devices 8 are mounted on the damper support elements 5 and connected to the rotating shaft 1 at respective damper connection points 13 adjacent the corresponding damper support elements 5, so that the damper connection points 13 are located near the opposite ends of the rotating shaft 1 far away from the motor connection point 12. In an alternative embodiment (not shown) the motor support element 4 with the motor-reducer assembly 7 and the motor connection point 12 are located at or near one end of the rotating shaft 1 and one damper support element 5 with a single torsional vibration damping device 8 and a single damper connection point 13 are located at or near the other end of the rotating shaft 1.

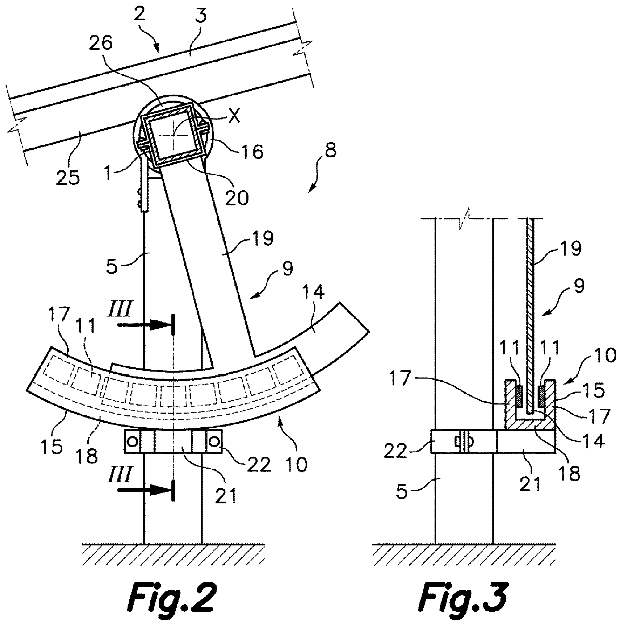

As best shown in Figs. 2 and 3, each torsional vibration damping device 8 comprises a moving member 9 rigidly connected to the rotating shaft 1 and a stationary member 10 rigidly attached to the corresponding damper support element 5. The moving member 9 has a moving damper section 14 connected by an arm 19 to a shaft fastening element 20, such as a shaft clamp, which is fastened to the rotating shaft 1 at a damper connection point 13 adjacent the damper support element 5 so that the moving damper section 14 moves with the rotating shaft 1. The stationary member 10 has a stationary damper section 15 connected to a base support 21 which in turn is connected to a post fastening element 22, such as a post clamp, fastened to the damper support element 5, so that stationary damper section 15 remains stationary together with the damper support element 5.

Alternatively, the arm 19 of the moving member 9 can be directly attached to the bearing 26, which is usually comprised of two complementary solid parts made of a low friction plastic material. The stationary damper section 15 can be alternatively connected to the bearing support 16.

The stationary damper section 15 comprises two opposite walls 17 perpendicular to the longitudinal axis X, which are made of a ferromagnetic material, such as iron, cobalt, nickel or alloys thereof. The opposite walls 17 have respective arched top and bottom edges and are connected to one another by an arched bottom wall 18. The moving damper section 14 of the moving member 9 is made of an electrically conductive, non-ferromagnetic material, such as aluminium, cooper, or alloys thereof. The moving damper section 14 is plate-shaped, has opposite surfaces perpendicular to the longitudinal axis X and arched top and bottom edges.

The magnetic field-generating elements 11 are permanent magnets attached to both opposite walls 17 of the stationary damper section 15 forming two respective arched rows facing each other and rows having a centre in the longitudinal axis X. Each permanent magnet of one arched row is directly facing a permanent magnet of the other arched row. In an alternative embodiment (not shown), the magnetic field-generating elements 11 are electromagnets energized with electrical current generated by the solar panels 3 instead of permanent magnets.

As best shown in Fig. 2, the permanent magnets of the two arched rows have front surfaces laying in two respective planes parallel to the opposite walls 17 and therefore perpendicular to the longitudinal axis X. Between the front surfaces of the permanent magnets of the two arched rows a damping gap is provided. The moving damper section 14 of the moving member 9 is inserted so that it can move in the damping gap close to the magnetic field-generating elements 11 without contact.

Relative movement between the permanent magnets constituting the magnetic field-generating elements 11 and the moving damper section 14 made of an electrically conductive, non-ferromagnetic material produces a damping torque by Foucault currents effect which counteracts the effect of torsional vibration of the pivoting assembly 2 produced by the wind.

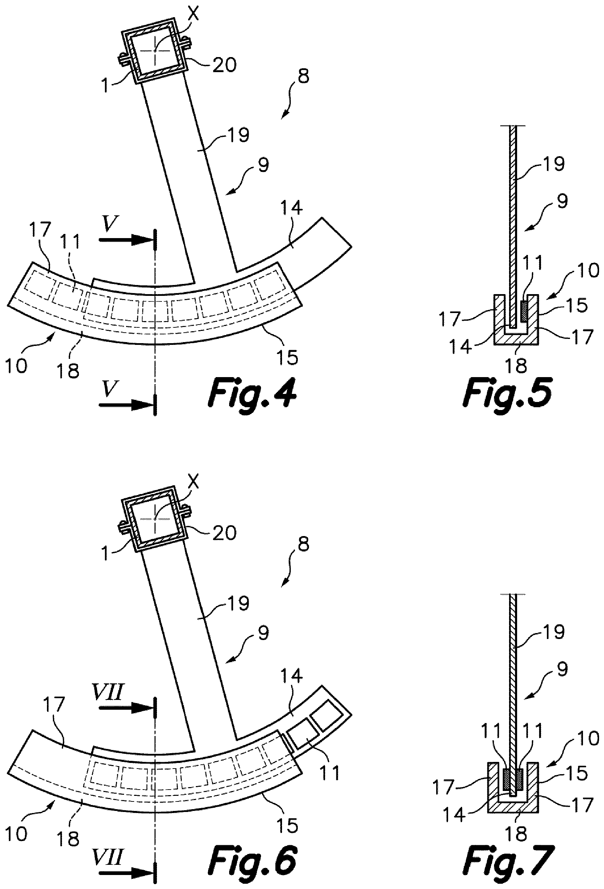

Figs. 4 and 5 show an alternative embodiment which is a variant of that described above in relation to Figs. 2 and 3. The embodiment shown in Figs. 4 and 5 differs from Figs. 2 and 3 in that the permanent magnets constituting the magnetic field-generating elements 11 are attached to only one of the opposite walls 17 forming one arched row rows having a centre in the longitudinal axis X. The permanent magnets have front surfaces laying in a plane parallel to the opposite walls 17, and the damping gap is provided between the front surfaces of the permanent magnets and the wall opposite thereto. The plate-shaped moving damper section 14 of the moving member 9 is inserted so that it can move in the damping gap close to the magnetic field-generating elements 11 without contact.

Alternative embodiments shown in Figs. 6-7 and 8-9 are inverse constructions to those described above with reference to Figs. 2-3 and 4-5. In the embodiments shown in Figs. 6-7 and 8-9 the magnetic field-generating elements 11 are attached to the moving damper section 14 of the moving member 9 and the stationary damper section 15 of the stationary member 10 is made of an electrically conductive, non-ferromagnetic material.

In Figs. 6 and 7, the stationary damper section 15 of the stationary member 10 comprises two opposite walls 17 perpendicular to the longitudinal axis X. The opposite walls 17 are made of an electrically conductive, non-ferromagnetic material, such as aluminium, cooper, or alloys thereof. The opposite walls 17 have respective arched top and bottom edges and are connected to one another by an arched bottom wall 18. A damping gap is provided between the two opposite walls 17. The stationary damper section 15 is fixedly attached to the damper support element by a post fastening element, such as a post clamp.

The moving damper section 14 is plate-shaped and has opposite surfaces perpendicular to the longitudinal axis X and arched top and bottom edges. The moving damper section 14 is made of a ferromagnetic material, such as iron, cobalt, nickel or alloys thereof. The magnetic field-generating elements 11 are permanent magnets attached to both opposite surfaces of the moving damper section 14 forming two respective opposite arched rows having a centre in the longitudinal axis X. Each permanent magnet of one arched row is directly opposite to a permanent magnet of the other arched row. The permanent magnets have opposite front surfaces laying in two respective planes parallel to the opposite surfaces of the moving damper section 14. The moving damper section 14 is connected by an arm 19 to a shaft fastening element 20, such as a shaft clamp, which is fastened to the rotating shaft 1. The moving damper section 14 with the permanent magnets is inserted so that it can move in the damping gap without contact.

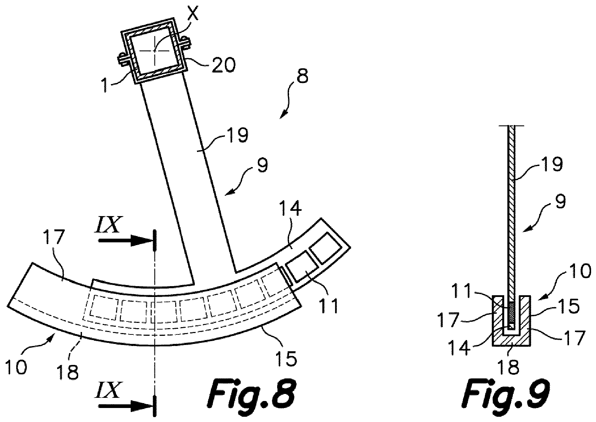

The embodiment shown in Figs. 8 and 9 is a variant of that described above in relation to Figs. 6 and 7. The embodiment shown in Figs. 8 and 9 differs from Figs. 6 and 7 in that the permanent magnets constituting the magnetic field-generating elements 11 are lodged in openings formed in the plate-shaped moving damper section 14. The openings and the permanent magnets form an arched row having a centre in the longitudinal axis X. The permanent magnets have opposite front surfaces laying in two respective planes parallel to the opposite surfaces of the moving damper section 14 at either side of the moving damper section 14. The moving damper section 14 with the permanent magnets is inserted so that it can move in the damping gap.

In any of the embodiments of the torsional vibration damping device 8 described above, the arched top and bottom edges of the plate-shaped moving damper section 14 as well as the arched top and bottom edges of the opposite walls and the arched bottom wall of the stationary damper section 15 preferably have a centre in the longitudinal axis X.

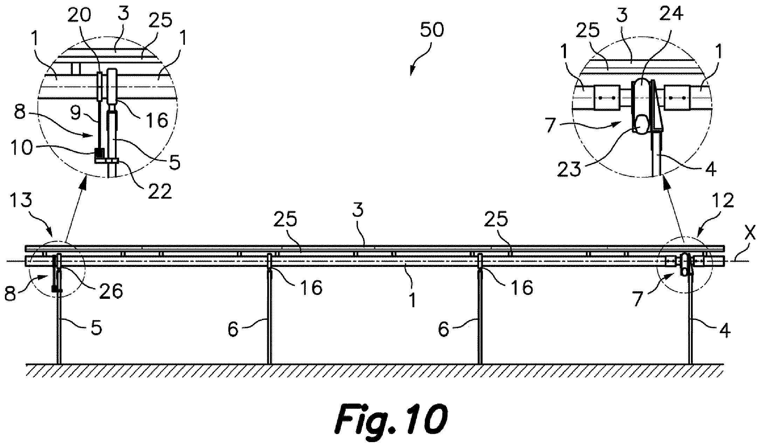

Fig. 10 shows a solar tracker with a torsional vibration damping device according to an alternative embodiment of the present invention which differs from that described above with reference to Fig. 1 in that the solar tracker 50 includes one single torsional vibration damping device 8 in cooperation with the motor-reducer assembly 7. In this embodiment, the rotating shaft 1 has two opposite ends, a motor support element 4 is located at or near to one of the opposite ends of the rotary shaft 1, one damper support element 5 is located at or near to the other end of the rotary shaft 1, and two simple support elements 6 are located between the motor support element 4 and the damper support element 5.

The damper support element 5 and each simple support element 6 are connected at the upper end thereof to a bearing support 16 carrying a bearing 26 mounted around the rotating shaft 1. The motor support element 4 supports a motor-reducer assembly 7 comprising an electric motor 23 connected to an irreversible reducer 24 which in turn is connected to the rotating shaft 1 at a motor connection point 12 located adjacent to the motor support element 4. The damper support element 5 supports a torsional vibration damping device 8 which is connected to the rotating shaft 1 at a damper connection point 13 adjacent the damper support element 5. The torsional vibration damping device 8 may be, for example, according to any one of the embodiments described with reference to Figs. 2-9.

With this construction, the motor connection point 12 is located at or near to one of the opposite ends of the rotary shaft 1 and the damper connection point 13 is located at or near to the other end of the rotary shaft 1.

It will be understood that in any of the embodiments of the solar tracker 50, the number of support elements 6 located between the motor support element 4 and the or each damper support element 5 is variable, and that additional torsional vibration damping devices 8 can be associated to one or more of the support elements 6 located between the motor support element 4 and the or each damper support element 5.

The scope of the invention is defined by the attached claims.

## Claims

1. A solar tracker with a torsional vibration damping device, comprising:
a rotating shaft (1) having a longitudinal axis (X);
a pivoting assembly (2) fixedly connected to the rotating shaft (1), the pivoting assembly (2) having solar panels (3) arranged to receive solar radiation;
a fixed structure comprising a plurality of support elements (4, 5, 6) rotationally supporting the rotating shaft (1) at a plurality of support points distributed therealong;
a motor-reducer assembly (7) operatively connected to rotate the rotating shaft (1) about the longitudinal axis (X) so as to track the sun; and
a torsional vibration damping device (8) having one moving member (9) rigidly connected to the rotating shaft (1) to move therewith;
the motor-reducer assembly (7) is cinematically connected to the rotating shaft (1) at a motor connection point (12);
the motor-reducer assembly (7) has an irreversible reducer (24) which provides retention against torsional vibration of the rotating shaft (1) at the motor connection point (12);
**characterized in that**:
the torsional vibration damping device (8) further comprises a stationary member (10) which is rigidly attached to the fixed structure;
the moving member (9) of the torsional vibration damping device (8) is rigidly connected to the rotating shaft (1) at a damper connection point (13) spaced apart from the motor connection point (12) and arranged to move close to the stationary member (10) without contact; and
one member selected between the moving member (9) and the stationary member (10) comprises magnetic field-generating elements (11) and the other member selected between the moving member (9) and the stationary member (10) comprises a section made of an electrically conductive, non-ferromagnetic material, relative movement between the magnetic field-generating elements (11) and the section made of an electrically conductive, non-ferromagnetic material producing a damping torque by Foucault currents effect.

2. The solar tracker with a torsional vibration damping device according to claim 1, wherein the rotating shaft (1) has opposite ends and an intermediate middle region, the motor connection point (12) is located at or near to one of the opposite ends of the rotary shaft (1), and the damper connection point (13) is located at or near to the other end of the rotary shaft (1).

3. The solar tracker with a torsional vibration damping device according to claim 1, wherein the rotating shaft (1) has opposite ends and an intermediate middle region, wherein and the motor connection point (12) is located in the intermediate middle region, the damper connection point (13) is located at or near to one of the opposite ends of the rotary shaft (1), and a second torsional vibration damping device is provided having a stationary member (10) rigidly attached to the fixed structure and a moving member (9) rigidly connected to the rotating shaft (1) at a second damper connection point (13) located at or near to the other end of the rotating shaft (1) and arranged to move close to the corresponding stationary member (10) without contact.

4. The solar tracker with a torsional vibration damping device according to claim 1, 2 or 3, wherein the motor-reducer assembly (7) is supported on a motor support element (4) of the plurality of support elements (4, 5, 6), the motor connection point (12) is located adjacent to the motor support element (4), the stationary member (10) of the or each torsional vibration damping device (8) is supported on a damper support element (5) of the plurality of support elements (4, 5, 6).

5. The solar tracker with a torsional vibration damping device according to claim 4, wherein one or more simple support elements (6) of the plurality of support elements (4, 5, 6) are located between the motor support element (4) and the or each damper support element (5).

6. The solar tracker with a torsional vibration damping device according to any one of claims 1 to 5, wherein the magnetic field-generating elements (11) are attached to a stationary damper section (15) comprised in the stationary member (10) and the section made of an electrically conductive, non-ferromagnetic material is a moving damper section (14) comprised in the moving member (9).

7. The solar tracker with a torsional vibration damping device according to claim 6, wherein the stationary damper section (15) comprises two opposite walls (17) perpendicular to the longitudinal axis (X) and made of a ferromagnetic material, the magnetic field-generating elements (11) are permanent magnets attached to one of the opposite walls (17) forming an arched row, the permanent magnets have front surfaces laying in a plane parallel to the opposite walls (17), and a damping gap is provided between the front surfaces of the permanent magnets and the wall opposite thereto.

8. The solar tracker with a torsional vibration damping device according to claim 7, wherein the stationary damper section (15) comprises two opposite walls (17) perpendicular to the longitudinal axis (X) and made of a ferromagnetic material, the magnetic field-generating elements (11) are permanent magnets attached to both opposite walls (17) forming two respective arched rows, the permanent magnets of the two arched rows have front surfaces laying in two respective planes parallel to the opposite walls (17), and a damping gap is provided between the front surfaces of the permanent magnets of the two arched rows.

9. The solar tracker with a torsional vibration damping device according to claim 7 or 8, wherein the moving damper section (14) is plate-shaped, has opposite surfaces perpendicular to the longitudinal axis (X), and is inserted and can move in the damping gap.

10. The solar tracker with a torsional vibration damping device according to any one of claims 1 to 5, wherein the magnetic field-generating elements (11) are attached to a moving damper section (14) comprised in the moving member (9) and the section made of an electrically conductive, non-ferromagnetic material is a stationary damper section (15) comprised in the stationary member (10).

11. The solar tracker with a torsional vibration damping device according to claim 10, wherein the stationary damper section (15) comprises two opposite walls (17) perpendicular to the longitudinal axis (X) and made of an electrically conductive, non-ferromagnetic material, a damping gap is provided between the two opposite walls (17), the moving damper section (14) is plate-shaped and has opposite surfaces perpendicular to the longitudinal axis (X), the magnetic field-generating elements (11) are permanent magnets lodged in openings of the moving damper section (14) forming an arched row, the permanent magnets have opposite front surfaces laying in two respective planes parallel to the opposite surfaces of the moving damper section (14) at either side of the moving damper section (14), and the moving damper section (14) with the permanent magnets is inserted and can move in the damping gap.

12. The solar tracker with a torsional vibration damping device according to claim 10, wherein the stationary damper section (15) comprises two opposite walls (17) perpendicular to the longitudinal axis (X) and made of an electrically conductive, non-ferromagnetic material, a damping gap is provided between the two opposite walls (17), the moving damper section (14) is plate-shaped and has opposite surfaces perpendicular to the longitudinal axis (X), the magnetic field-generating elements (11) are permanent magnets attached to both opposite surfaces of the moving damper section (14) forming two respective opposite arched rows, the permanent magnets have opposite front surfaces laying in two respective planes parallel to the opposite surfaces of the moving damper section (14) at either side of the moving damper section (14), and the moving damper section (14) with the permanent magnets is inserted and can move in the damping gap.

13. The solar tracker with a torsional vibration damping device according to any one of claims 6 to 12, wherein the moving damper section (14) has arched top and bottom edges.

14. The solar tracker with a torsional vibration damping device according to any one of claims 7 to 12, wherein the opposite walls (17) of the stationary damper section (15) have respective arched top and bottom edges and are connected to one another by an arched bottom wall (18).

15. The solar tracker with a torsional vibration damping device according to any one of claims 4 to 14, wherein the moving damper section (14) is connected by an arm (19) to a shaft fastening element (20) fastened to the rotating shaft (1) and the stationary damper section (15) is connected by a base support (21) to a post fastening element (22) fastened to the damper support element (5).

## Patentansprüche

1. Sonnenverfolger mit Torsionsschwingungsdämpfungsvorrichtung, umfassend:
eine Drehwelle (1) mit einer Längsachse (X);
eine fest mit der Drehwelle (1) verbundene Schwenkeinheit (2), wobei die Schwenkeinheit (2) zur Aufnahme von Sonnenstrahlung angeordnete Solarpaneele (3) aufweist;
eine feste Struktur mit einer Vielzahl von Trägerelementen (4, 5, 6), die die Drehwelle (1) an einer Vielzahl von entlang derselben verteilten Lagerpunkten drehbar lagern;
eine Motor-Untersetzer-Baugruppe (7), die funktionell zum Drehen der Drehwelle (1) um die Längsachse (X) zum Zwecke der Sonnenverfolgung verbunden ist; und
eine Torsionsschwingungsdämpfungsvorrichtung (8) mit einem beweglichen Element (9), das starr mit der Drehwelle (1) verbunden ist, um sich mit dieser zu bewegen;
die Motor-Untersetzer-Baugruppe (7) ist an einem Motorverbindungspunkt (12) kinematisch mit der Drehwelle (1) verbunden;
die Motor-Untersetzer-Baugruppe (7) ein nicht umkehrbares Untersetzungselement (24) zur Sicherung der Drehwelle (1) vor Torsionsschwingungen am Motorverbindungspunkt (12) aufweist;
**dadurch gekennzeichnet, dass**:
die Torsionsschwingungsdämpfungsvorrichtung (8) ferner ein feststehendes, starr an der festen Struktur befestigtes feststehendes Element (10) aufweist;
das bewegliche Element (9) der Torsionsschwingungsdämpfungsvorrichtung (8) starr an einem von dem Motorverbindungspunkt (12) beabstandeten Dämpferverbindungspunkt (13) mit der Drehwelle (1) verbunden ist und so angeordnet ist, dass es sich an das feststehende Element (10) annähert, ohne es zu berühren; und
ein zwischen dem beweglichen Element (9) und dem feststehenden Element (10) ausgewähltes Element Magnetfelderzeugungselemente (11) aufweist und das andere zwischen dem beweglichen Element (9) und dem feststehenden Element (10) ausgewählte Element einen Bereich aus einem elektrisch leitenden, nicht-ferromagnetischen Material aufweist, wobei eine Relativbewegung zwischen den Magnetfelderzeugungselementen (11) und dem Bereich aus einem elektrisch leitenden, nicht-ferromagnetischen Material ein Dämpfungsmoment nach dem Foucaultschen Wirbelstromeffekt erzeugt.

2. Sonnenverfolger mit Torsionsschwingungsdämpfungsvorrichtung nach Anspruch 1, wobei die Drehwelle (1) entgegengesetzte Enden und einen dazwischenliegenden Mittelbereich aufweist, der Motorverbindungspunkt (12) an oder nahe einem der entgegengesetzten Enden der Drehwelle (1) angeordnet ist und der Dämpferverbindungspunkt (13) an oder nahe dem anderen Ende der Drehwelle (1) angeordnet ist.

3. Sonnenverfolger mit Torsionsschwingungsdämpfungsvorrichtung nach Anspruch 1, wobei die Drehwelle (1) entgegengesetzte Enden und einen dazwischenliegenden Mittelbereich aufweist, wobei der Motorverbindungspunkt (12) in dem dazwischenliegenden Mittelbereich angeordnet ist, der Dämpferverbindungspunkt (13) an oder nahe einem der entgegengesetzten Enden der Drehwelle (1) angeordnet ist und eine zweite Torsionsschwingungsdämpfungsvorrichtung vorgesehen ist, die ein starr an der festen Struktur befestigtes feststehendes Element (10) und ein an einem zweiten Dämpferverbindungspunkt (13) an oder nahe dem anderen Ende der Drehwelle (1) starr mit der Drehwelle (1) verbundenes bewegliches Element (9) aufweist, das so angeordnet ist, dass es sich an das feststehende Element (10) annähert, ohne es zu berühren.

4. Sonnenverfolger mit Torsionsschwingungsdämpfungsvorrichtung nach Anspruch 1, 2 oder 3, wobei die Motor-Untersetzer-Baugruppe (7) auf einem Motorträgerelement (4) der Vielzahl von Trägerelementen (4, 5, 6) gelagert ist, der Motorverbindungspunkt (12) neben dem Motorträgerelement (4) angeordnet ist und das feststehende Element (10) der oder jeder Torsionsschwingungsdämpfungsvorrichtung (8) auf einem Dämpferträgerelement (5) der Vielzahl von Trägerelementen (4, 5, 6) gelagert ist.

5. Sonnenverfolger mit Torsionsschwingungsdämpfungsvorrichtung nach Anspruch 4, wobei ein oder mehrere einfache Trägerelemente (6) der Vielzahl von Trägerelementen (4, 5, 6) zwischen dem Motorträgerelement (4) und dem oder jedem Dämpferträgerelement (5) angeordnet sind.

6. Sonnenverfolger mit Torsionsschwingungsdämpfungsvorrichtung nach einem der Ansprüche 1 bis 5, wobei die Magnetfelderzeugungselemente (11) an einem in dem feststehenden Element (10) enthaltenen feststehenden Dämpferbereich (15) befestigt sind und der aus einem elektrisch leitenden, nicht-ferromagnetischen Material bestehende Bereich ein in dem beweglichen Element (9) enthaltener beweglicher Dämpferbereich (14) ist.

7. Sonnenverfolger mit Torsionsschwingungsdämpfungsvorrichtung nach Anspruch 6, wobei der feststehende Dämpferbereich (15) zwei senkrecht zur Längsachse (X) angeordnete, gegenüberliegende Wände (17) aus einem ferromagnetischen Material aufweist, die Magnetfelderzeugungselemente (11) an einer der gegenüberliegenden Wände (17) befestigte Permanentmagnete sind und eine bogenförmige Reihe bilden, die Permanentmagnete in einer Ebene parallel zu den gegenüberliegenden Wänden (17) liegende Stirnflächen aufweisen und ein Dämpfungsspalt zwischen den Stirnflächen der Permanentmagnete und der diesen gegenüberliegenden Wand vorgesehen ist.

8. Sonnenverfolger mit Torsionsschwingungsdämpfungsvorrichtung nach Anspruch 7, wobei der feststehende Dämpferbereich (15) zwei senkrecht zur Längsachse (X) angeordnete, gegenüberliegende Wände (17) aus einem ferromagnetischen Material aufweist, die Magnetfelderzeugungselemente (11) an beiden gegenüberliegenden Wänden (17) befestigte Permanentmagnete sind und zwei jeweilige bogenförmige Reihen bilden, die Permanentmagnete der beiden bogenförmigen Reihen in zwei jeweiligen Ebenen parallel zu den gegenüberliegenden Wänden (17) liegende Stirnflächen aufweisen und zwischen den Stirnflächen der Permanentmagnete der beiden bogenförmigen Reihen ein Dämpfungsspalt vorgesehen ist.

9. Sonnenverfolger mit Torsionsschwingungsdämpfungsvorrichtung nach Anspruch 7 oder 8, wobei der bewegliche Dämpferbereich (14) tellerförmig ist, senkrecht zur Längsachse (X) angeordnete gegenüberliegende Flächen aufweist und in den Dämpfungsspalt eingesetzt ist und sich darin bewegen kann.

10. Sonnenverfolger mit Torsionsschwingungsdämpfungsvorrichtung nach einem der Ansprüche 1 bis 5, wobei die Magnetfelderzeugungselemente (11) an einem in dem beweglichen Element (9) enthaltenen beweglichen Dämpferbereich (14) befestigt sind und der aus einem elektrisch leitenden, nicht-ferromagnetischen Material bestehende Bereich ein in dem feststehenden Element (10) enthaltener feststehender Dämpferbereich (15) ist.

11. Sonnenverfolger mit Torsionsschwingungsdämpfungsvorrichtung nach Anspruch 10, wobei der feststehende Dämpferbereich (15) zwei senkrecht zur Längsachse (X) angeordnete, gegenüberliegende Wände (17) aus einem elektrisch leitenden, nicht-ferromagnetischen Material aufweist, ein Dämpfungsspalt zwischen den beiden gegenüberliegenden Wänden (17) vorgesehen ist, der bewegliche Dämpferbereich (14) tellerförmig ist und senkrecht zur Längsachse (X) angeordnete, gegenüberliegende Flächen aufweist, die Magnetfelderzeugungselemente (11) in Öffnungen des beweglichen Dämpferbereichs (14) angeordnete Permanentmagnete sind und eine bogenförmige Reihe bilden, die Permanentmagnete gegenüberliegende Stirnflächen aufweisen, die in zwei jeweiligen Ebenen parallel zu den gegenüberliegenden Flächen des beweglichen Dämpferbereichs (14) auf beiden Seiten des beweglichen Dämpferbereichs (14) liegen und der bewegliche Dämpferbereich (14) mit den Permanentmagneten in den Dämpfungsspalt eingesetzt ist und sich darin bewegen kann.

12. Sonnenverfolger mit Torsionsschwingungsdämpfungsvorrichtung nach Anspruch 10, wobei der feststehende Dämpferbereich (15) zwei senkrecht zur Längsachse (X) angeordnete, gegenüberliegende Wände (17) aus einem elektrisch leitenden, nicht-ferromagnetischen Material aufweist, ein Dämpfungsspalt zwischen den beiden gegenüberliegenden Wänden (17) vorgesehen ist, der bewegliche Dämpferbereich (14) tellerförmig ist und senkrecht zur Längsachse (X) angeordnete, gegenüberliegende Flächen aufweist, die Magnetfelderzeugungselemente (11) an beiden gegenüberliegenden Flächen des sich bewegenden Dämpferbereichs (14) befestigte Permanentmagnete sind und zwei jeweils gegenüberliegende bogenförmige Reihen bilden, die Permanentmagnete gegenüberliegende Stirnflächen aufweisen, die in zwei jeweiligen Ebenen parallel zu den gegenüberliegenden Flächen des beweglichen Dämpferbereichs (14) auf beiden Seiten des beweglichen Dämpferbereichs (14) liegen und der bewegliche Dämpferbereich (14) mit den Permanentmagneten in den Dämpfungsspalt eingesetzt ist und sich darin bewegen kann.

13. Sonnenverfolger mit Torsionsschwingungsdämpfungsvorrichtung nach einem der Ansprüche 6 bis 12, wobei der bewegliche Dämpferbereich (14) eine gebogene Ober- und Unterkante aufweist.

14. Sonnenverfolger mit Torsionsschwingungsdämpfungsvorrichtung nach einem der Ansprüche 7 bis 12, wobei die gegenüberliegenden Wände (17) des feststehenden Dämpferbereichs (15) entsprechende gebogene Ober- und Unterkanten aufweisen und durch eine gebogene Bodenwand (18) miteinander verbunden sind.

15. Sonnenverfolger mit Torsionsschwingungsdämpfungsvorrichtung nach einem der Ansprüche 4 bis 14, wobei der bewegliche Dämpferbereich (14) über einen Arm (19) mit einem an der Drehwelle (1) befestigten Wellenbefestigungselement (20) verbunden ist und der feststehende Dämpferbereich (15) über einen Basisträger (21) mit einem am Dämpferträgerelement (5) befestigten Pfostenbefestigungselement (22) verbunden ist.

## Revendications

1. Un suiveur solaire ayant un dispositif amortisseur à vibration en torsion, comportant :
un arbre rotatif (1) ayant un axe longitudinal (X) ;
un ensemble pivotant (2) relié fixe à l'arbre rotatif (1), l'ensemble pivotant (2) ayant des panneaux solaires (3) aménagés pour recevoir la radiation solaire ;
une structure fixe comportant une pluralité de pièces de support (4,5,6) supportant en rotation l'arbre rotatif (1) à une pluralité de points de support distribués le long de celui-ci ;
un ensemble motoréducteur (7) opérationnellement connecté pour faire tourner l'arbre rotatif (1) autour de l'axe longitudinal (X) de sorte à suivre le soleil ; et
un dispositif d'amortisseur à vibration en torsion (8) ayant un élément mobile (9) relié rigide à l'arbre rotatif (1) pour se déplacer avec lui ;
l'ensemble motoréducteur (7) est cinématiquement relié à l'arbre rotatif (1) à un point de connexion du moteur (12) ;
l'ensemble motoréducteur (7) possède un réducteur irréversible (24) qui offre la rétention contre la vibration en torsion de l'arbre rotatif (1) au point de connexion de moteur (12) ;
**caractérisé en ce que** :
le dispositif amortisseur à vibration en torsion (8) comporte par ailleurs un élément fixe (10) qui est attaché rigide à la structure fixe ;
l'élément mobile (9) du dispositif amortisseur à vibration en torsion (8) est relié rigide à l'arbre rotatif (1) à un point de connexion d'amortisseur (13) écarté du point de connexion de moteur (12) et aménagé pour se déplacer proche à l'élément fixe (10) sans contact ; et
un élément sélectionné entre l'élément mobile (9) et l'élément fixe (10) comporte des pièces générant des champs magnétiques (11) et l'autre élément sélectionné entre le élément mobile (9) et l'élément fixe (10) comprend une section faite en un matériau conducteur électrique, non ferromagnétique, un mouvement relatif entre les pièces générant le champ magnétique (11) et la section faite en un matériau conducteur électrique non ferromagnétique produisant un couple d'amortissement par l'effet de courants Foucault.

2. Le suiveur solaire ayant un dispositif amortisseur de vibration en torsion conformément à la revendication 1, où l'arbre rotatif (1) possède des extrémités opposées et une région moyenne intermédiaire, le point de connexion moteur (12) est située à ou proche d'une des extrémités opposées de l'arbre rotatif (1) et le point de connexion de l'amortisseur (13) est situé à ou proche de l'autre extrémité de l'arbre rotatif (1).

3. Le suiveur solaire ayant un dispositif amortisseur de vibration en torsion conformément à la revendication 1, où l'arbre rotatif (1) possède des extrémités opposées et une région moyenne intermédiaire où le point de connexion de moteur (12) est situé dans la région moyenne intermédiaire, le point de connexion d'amortisseur (13) est située à ou proche d'une des extrémités opposées de l'arbre rotatif (1) et un deuxième dispositif amortisseur de vibration en torsion est pourvu ayant un élément fixe (10) attaché rigide à la structure fixe et un élément mobile (9) relié rigide à l'arbre rotatif (1) à un deuxième point de connexion d'amortisseur (13) situé à ou proche de l'autre extrémité de l'arbre rotatif (1) et aménagé pour se déplacer proche à l'élément fixe correspondant (10) sans contact.

4. Le suiveur solaire ayant un dispositif amortisseur de vibration en torsion conformément à la revendication 1, 2 ou 3 où l'ensemble motoréducteur (7) est supporté sur une pièce de support de moteur (4) de la pluralité des pièces de support (4, 5, 6), le point de connexion de moteur (12) est situé adjacent à la pièce de support du moteur (4), l'élément fixe (10) du ou de chaque dispositif amortisseur à vibration en torsion (8) est supporté sur une pièce de support d'amortisseur (5) de la pluralité d'éléments de support (4, 5, 6).

5. Le suiveur solaire ayant un dispositif amortisseur de vibration en torsion conformément à la revendication 4, où une ou plusieurs pièces de support simples (6) de la pluralité de pièces de support (4, 5, 6) sont situées entre la pièce de support de moteur (4) et la ou chacune des pièces de support d'amortisseur (5).

6. Le suiveur solaire ayant un dispositif amortisseur de vibration en torsion conformément à une quelconque des revendications 1 à 5, où les pièces générant le champ magnétique (11) sont attachées à une section d'amortisseur fixe (15) comprise dans l'élément fixe (10) et la section faite en un matériau conducteur électrique non ferromagnétique est une section d'amortisseur mobile (14) comprise dans l'élément mobile (9).

7. Le suiveur solaire ayant un dispositif amortisseur de vibration en torsion conformément à la revendication 6, où la section d'amortisseur fixe (15) comporte deux parois opposées (17) perpendiculaires à l'axe longitudinal (X) et faites en un matériau ferromagnétique, les pièces générant le champ magnétique (11) sont des imans permanents attachés à une des parois opposées (17) formant une rangée arquée, les imans permanents ont des surfaces frontales reposant sur un plan parallèle aux parois opposées (17) et un écart d'amortissement est prévu entre les surfaces frontales des imans permanents et la paroi qui leur est opposée.

8. Le suiveur solaire ayant un dispositif amortisseur de vibration en torsion conformément à la revendication 7, où la section d'amortisseur fixe (15) comporte deux parois opposées (17) perpendiculaires à l'axe longitudinal (X) et faite en un matériau ferromagnétique, les pièces générant le champ magnétique (11) sont des imans permanents attachés aux deux parois opposées (17) formant deux rangées arquées respectives, les imans permanents des deux rangées arquées possèdent des surfaces frontales reposant sur deux plans respectifs parallèles aux parois opposées (17) et un écart d'amortissement est prévu entre les surfaces frontales des imans permanents des deux rangées arquées.

9. Le suiveur solaire ayant un dispositif amortisseur de vibration en torsion conformément à la revendication 7 ou 8, où la section d'amortisseur mobile (14) a la forme d'une plaque, possède des surfaces opposées perpendiculaires à l'axe longitudinal (X) et est insérée et peut se déplacer dans l'écart d'amortissement.

10. Le suiveur solaire ayant un dispositif amortisseur de vibration en torsion conformément à une quelconque des revendications 1 à 5, où les pièces générant le champ magnétique (11) sont attachées à une section d'amortisseur mobile (14) comprise dans l'élément mobile (9) et la section faite en un matériau conducteur électrique non ferromagnétique est une section d'amortisseur fixe (15) comprise dans l'élément fixe (10).

11. Le suiveur solaire ayant un dispositif amortisseur de vibration en torsion conformément à la revendication 10, où la section d'amortisseur fixe (15) comporte deux parois opposées (17) perpendiculaires à l'axe longitudinal (X) et faite en un matériau conducteur électrique non ferromagnétique, un écart d'amortissement es prévu entre les deux parois opposées (17), la section d'amortisseur mobile (14) a la forme d'une plaque et possède des surfaces opposées perpendiculaires à l'axe longitudinal (X), les pièces générant le champ magnétique (11) sont des imans permanents logés dans des ouvertures de la section d'amortisseur mobile (14) formant une rangée arquée, les imans magnétiques possèdent des surfaces frontales opposées reposant sur deux plans respectifs parallèles aux surfaces opposées de la section d'amortisseur mobile (14) à chaque côté de la section d'amortisseur mobile (14) et la section d'amortisseur mobile (14) avec les imans permanents est insérée et peut se déplacer dans l'écart d'amortissement.

12. Le suiveur solaire ayant un dispositif amortisseur de vibration en torsion conformément à la revendication 10, où la section d'amortisseur fixe (15) comporte deux parois opposées (17) perpendiculaires à l'axe longitudinal (X) et faite en un matériau conducteur électrique non ferromagnétique, un écart amortisseur est prévu dans les deux parois opposées (17), la section d'amortisseur mobile (14) a la forme d'une plaque et possède des surfaces opposées perpendiculaires à l'axe longitudinal (X), les pièces générant la champ magnétique (11) sont des imans permanents attachés aux deux surfaces opposées de la section d'amortisseur mobile (14) formant deux rangées arquées opposées respectives, les imans permanents possèdent des surfaces frontales reposant sur deux plans respectifs parallèles aux surfaces opposées de la section d'amortisseur mobile (14) à chaque côté de la section d'amortisseur mobile (14) et la section d'amortisseur mobile (14) ayant les imans permanents est insérée et peut se déplacer dans l'écart d'amortissement.

13. Le suiveur solaire ayant un dispositif amortisseur de vibration en torsion conformément à une quelconque des revendications 6 à 12, où la section d'amortisseur mobile (14) possède une partie supérieure arquée et des bords inférieurs.

14. Le suiveur solaire ayant un dispositif amortisseur de vibration en torsion conformément à une quelconque des revendications 7 à 12, où les parois opposées (17) de la section d'amortisseur fixe (15) possède une partie supérieure arquée et des bords inférieurs respectifs et sont reliées entre elles par une paroi inférieure arquée (18).

15. Le suiveur solaire ayant un dispositif amortisseur de vibration en torsion conformément à une quelconque des revendication 4 à 14, où la section d'amortisseur mobile (14) est reliée par un bras (19) à une pièce de fixation d'arbre (20) fixée sur l'arbre rotatif (1) et la section d'amortisseur fixe (15) est reliée par un support de base (21) à une pièce de fixation de poteau (22) fixée à la pièce de support d'amortisseur (5).
